# EUROPÄISCHE PATENTANMELDUNG

(11) **EP 4 273 112 A1**
(43) Veröffentlichungstag der Anmeldung: **08.11.2023**
(21) Anmeldenummer: 23170336.4
(22) Anmeldetag: 27.04.2023
(51) Int. Cl.: C05F 17/907, C05F 17/10

(54) **VERFAHREN ZUM KOMPOSTIEREN VON HAUSHALTSABFÄLLEN**

(30) Priorität: 02.05.2022 DE 102022110721; 14.12.2022 DE 102022133299
(71) Anmelder: Fiedler, Volkhard, 47804 Krefeld (DE); Fiedler, Matthias, 47804 Krefeld (DE)
(72) Erfinder: Fiedler, Volkhard, 47804 Krefeld (DE); Fiedler, Matthias, 47804 Krefeld (DE); Hartmann, Werner, 47804 Krefeld (DE)
(74) Vertreter: Dr. Stark & Partner Patentanwälte mbB

(57) **Zusammenfassung**

Die Erfindung betrifft ein Verfahren zum Kompostieren von Haushaltsabfällen, vorzugsweise von nicht gekochten und nicht zubereiteten Lebensmittelresten, von Pflanzen und/oder von Gartenabfällen. Um ein Verfahren anzugeben, das sich durch ein gutes Kompostierergebnis auszeichnet, deutlich kürzer dauert und das darüber hinaus in Privathaushalten durchgeführt werden kann, sollen
- die zu kompostierenden Haushaltsabfälle in einem ersten Schritt in einem Behältnis über einen Zeitraum von 7 bis 15 Tagen, vorzugsweise von 10 bis 14 Tagen, derart erhitzt werden, dass die Temperatur der zu kompostierenden Haushaltsabfälle, vorzugsweise konstant, in einem Bereich zwischen 55 °C und 75 °C, vorzugsweise zwischen 60 °C und 65 °C, liegt, wobei in dem ersten Schritt die zu kompostierenden Haushaltsabfälle, vorzugsweise regelmäßig, zur Gewährleistung einer ausreichenden Sauerstoffzufuhr durchmischt werden und, vorzugsweise regelmäßig, die massenspezifische Feuchte der zu kompostierenden Haushaltsabfälle gemessen und durch Hinzugeben von Wasser so angepasst wird, dass die zu kompostierenden Haushaltsabfälle eine massenspezifische Feuchte von 45 % bis 65 % aufweisen,
- in einem zweiten Schritt anschließend die zu kompostierenden Haushaltsabfälle auf eine Temperatur zwischen 20 °C und 35 °C, vorzugsweise zwischen 25 °C und 27 °C, abkühlen bzw. abgekühlt werden und
- anschließend in einem dritten Schritt
den zu kompostierenden Haushaltsabfällen unter Vermischen Erde zugeführt wird, wobei die Masse der zugeführten Erde zwischen 2 % und 10 % der Masse der zu kompostierenden Haushaltsabfälle, vorzugsweise zwischen 4 % und 5 % der Masse der zu kompostierenden Haushaltsabfälle, beträgt, und das Gemisch aus den zu kompostierenden Haushaltsabfällen und der Erde über einen Zeitraum von 7 bis 15 Tagen, vorzugsweise von 10 bis 14 Tagen, in dem Temperaturbereich des zweiten Schrittes zum Reifen gelagert wird
und/oder
den zu kompostierenden Haushaltsabfällen unter Vermischen aerob abbauende Mikroorganismen in fester Form und/oder in flüssiger Form zugeführt werden und das Gemisch aus den zu kompostierenden Haushaltsabfällen und den Mikroorganismen über einen Zeitraum von 7 bis 15 Tagen, vorzugsweise von 10 bis 14 Tagen, in dem Temperaturbereich des zweiten Schrittes zum Reifen gelagert wird.

## Beschreibung

Die Erfindung betrifft ein Verfahren zum Kompostieren von Haushaltsabfällen, vorzugsweise von nicht gekochten und nicht zubereiteten Lebensmittelresten, von Pflanzen und/oder von Gartenabfällen.

Bei aus dem Stand der Technik bekannten Verfahren werden pflanzliche Abfälle, beispielsweise aus Gärten oder aus Parks, oder auch Gemüsereste zu meterhohen Haufen aufgeschichtet. Die Rotte der pflanzlichen Abfälle beginnt im Inneren eines Haufens. Dabei entstehen Temperaturen von bis zu 70 °C. Die Temperatur nimmt vom Inneren des Haufens nach außen hin ab. Damit für den Kompostiervorgang auch die Randbereiche erhöhter Temperatur ausgesetzt werden, muss ein Haufen im Abstand von rund 3 Monaten gewendet werden, wobei das Wenden drei Mal wiederholt wird, so dass der gesamte Kompostiervorgang insgesamt 9 bis 12 Monate dauert.

Aufgabe der Erfindung ist es, die vorgenannten Nachteile zu vermeiden und ein Verfahren anzugeben, dass sich durch ein gutes Kompostierergebnis auszeichnet, deutlich kürzer dauert und dass darüber hinaus in Privathaushalten durchgeführt werden kann.

Diese Aufgabe wird dadurch gelöst,
- dass die zu kompostierenden Haushaltsabfälle in einem ersten Schritt in einem Behältnis über einen Zeitraum von 7 bis 15 Tagen, vorzugsweise von 10 bis 14 Tagen, derart erhitzt werden, dass die Temperatur der zu kompostierenden Haushaltsabfälle, vorzugsweise konstant, in einem Bereich zwischen 55 °C und 75 °C, vorzugsweise zwischen 60 °C und 65 °C, liegt, wobei in dem ersten Schritt die zu kompostierenden Haushaltsabfälle, vorzugsweise regelmäßig, zur Gewährleistung einer ausreichenden Sauerstoffzufuhr durchmischt werden und, vorzugsweise regelmäßig, die massenspezifische Feuchte der zu kompostierenden Haushaltsabfälle gemessen und durch Hinzugeben von Wasser so angepasst wird, dass die zu kompostierenden Haushaltsabfälle eine massenspezifische Feuchte von 45 % bis 65 % aufweisen,
- dass in einem zweiten Schritt anschließend die zu kompostierenden Haushaltsabfälle auf eine Temperatur zwischen 20 °C und 35 °C, vorzugsweise zwischen 25 °C und 27 °C, abkühlen bzw. abgekühlt werden und
- dass anschließend in einem dritten Schritt
   den zu kompostierenden Haushaltsabfällen unter Vermischen Erde zugeführt wird, wobei die Masse der zugeführten Erde zwischen 2 % und 10 % der Masse der zu kompostierenden Haushaltsabfälle, vorzugsweise zwischen 4 % und 5 % der Masse der zu kompostierenden Haushaltsabfälle, beträgt, und das Gemisch aus den zu kompostierenden Haushaltsabfällen und der Erde über einen Zeitraum von 7 bis 15 Tagen, vorzugsweise von 10 bis 14 Tagen, in dem Temperaturbereich des zweiten Schrittes zum Reifen gelagert wird
   und/oder
   den zu kompostierenden Haushaltsabfällen unter Vermischen aerob abbauende Mikroorganismen in fester Form und/oder in flüssiger Form zugeführt werden und das Gemisch aus den zu kompostierenden Haushaltsabfällen und den Mikroorganismen über einen Zeitraum von 7 bis 15 Tagen, vorzugsweise von 10 bis 14 Tagen, in dem Temperaturbereich des zweiten Schrittes zum Reifen gelagert wird.

Im ersten Schritt werden die zu kompostierenden Haushaltsabfälle, wie Biomaterial, in einem Behältnis über einen Zeitraum von 7 bis 15 Tagen derart erhitzt, dass die Temperatur der zu kompostierenden Haushaltsabfälle zwischen 55 °C und 75 °C liegt. Hierfür kann das Behältnis beispielsweise außenseitig eine Heizwendel aufweisen. In diesem Schritt erfolgt eine Durchmischung, damit eine ausreichende Sauerstoffzufuhr gewährleistet ist. Gleichzeitig wird die Feuchte der zu kompostierenden Haushaltsabfälle gemessen. Sinkt die massenspezifische Feuchte unter 45 %, wird Wasser zugegeben.

Das erfindungsgemäße Verfahren erlaubt eine effektive Kompostierung von in einem Privathaushalt anfallenden Mengen zu kompostierender Haushaltsabfälle. Das verwendete Behältnis ist vorzugsweise so gewählt, dass es die Menge an zu kompostierender Haushaltsabfälle aufnimmt, die in der Hälfte der Gesamtdauer des erfindungsgemäßen Verfahrens in dem Privathaushalt anfällt.

Dieser erste Schritt wird auch als Heißrotte bezeichnet. Bei einer Rotte findet eine Zersetzung hauptsächlich zu Humus, Kohlenstoffdioxid und Wasser statt. Es kommt zu einer Mineralisation und einer Humifizierung der zu kompostierenden Haushaltsabfälle unter aeroben Bedingungen. Das Durchmischen kann manuell oder aber beispielsweise durch eine Rühreinrichtung erfolgen.

Anschließend kühlen die zu kompostierenden Haushaltsabfälle aus dem ersten Schritt in einem zweiten Schritt auf eine Temperatur zwischen 20 °C und 35 °C ab bzw. werden abgekühlt. Das Abkühlen im zweiten Schritt kann durch ein bloßes Stehenlassen erfolgen. Dann kühlen sich die zu kompostierenden Haushaltsabfälle von selbst ab. Alternativ oder in Ergänzung kann eine Kühleinrichtung, beispielsweise eine auf der Außenseite des Behältnisses angeordnete Kühleinrichtung, vorgesehen sein. Dann kann ein "aktives" Abkühlen erfolgen.

Anschließend beginnt im dritten Schritt die Nachrotte. Im dritten Schritt kann den zu kompostierenden Haushaltsabfällen zwischen 2 % und 10 % der Masse der zu kompostierenden Haushaltsabfälle an Erde untergemischt werden. Die Erde liefert Bakterien, um den Nachrottungsprozess zu initiieren und/oder zu beschleunigen. Durch die Zugabe der Erde wird insoweit das zu kompostierende Material aus dem ersten Schritt bakteriell "beimpft". Die Mischung aus dem dritten Schritt lagert dann zwischen 7 und 15 Tagen. Nach Abschluss des dritten Schrittes steht ein nährstoffreicher Kompost zur Verfügung, der beispielsweise im Garten oder in Blumentöpfen ausgestreut werden kann. Bei dem erfindungsgemäßen Verfahren handelt es sich insoweit um einen biologischen Kompostierungsprozess. Das kompostierte Material hat eine krümelige Konsistenz.

Zu Beginn des erfindungsgemäßen Verfahrens kann die Menge an zu kompostierenden Haushaltsabfällen etwa 40 Liter betragen, was einem Gewicht von rund 40 kg entspricht. Aufgrund der reduzierten Wassermenge beträgt die Menge an zu kompostierenden Haushaltsabfällen am Ende des ersten Schrittes nur noch rund 20 Liter, d. h. rund 20 kg. Im dritten Schritt wird dieser Menge an zu kompostierenden Haushaltsabfällen, d. h. den rund 20 kg, rund 400 g bis 2000 g Erde (2 % bis 10 % der Masse der zu kompostierenden Haushaltsabfälle) zugegeben. Bei Beendigung des dritten Schrittes liegt eine kompostierte Masse von rund 20 Litern bis 22 Litern, d. h. von rund 20 kg bis 22 kg, vor.

Sofern sämtliche Schritte des erfindungsgemäßen Verfahrens in einem Behältnis durchgeführt werden, bietet es sich an, wenn der Benutzer beispielsweise in der Küche seines Hauses zwei Behältnisse aufstellt. Bei einer zeitlich versetzten Inbetriebnahme von zwei Wochen steht dem Benutzer dann bei einer vierwöchigen Gesamtdauer des erfindungsgemäßen Verfahrens alle 14 Tage ein nährstoffreicher Kompost zur Verfügung. Sofern vier Behältnisse betrieben werden, stünde bei einer zeitlich versetzten Inbetriebnahme von einer Woche dem Benutzer wiederum bei einer vierwöchigen Gesamtdauer des erfindungsgemäßen Verfahrens jede Woche ein nährstoffreicher Kompost zur Verfügung.

Alternativ zu der Erde oder in Ergänzung zu der Erde können im dritten Schritt den zu kompostierenden Haushaltsabfällen unter Vermischen aerob abbauende Mikroorganismen, vorzugsweise in fester Form und/oder in flüssiger Form, zugeführt werden.

Sofern im dritten Schritt den zu kompostierenden Haushaltsabfällen unter Vermischen aerob abbauende Mikroorganismen zugeführt werden, wird das Gemisch aus den zu kompostierenden Haushaltsabfällen und den Mikroorganismen dann über einen Zeitraum von 7 bis 15 Tagen, vorzugsweise von 10 bis 14 Tagen, in dem Temperaturbereich des zweiten Schrittes zum Reifen gelagert.

Sofern im dritten Schritt den zu kompostierenden Haushaltsabfällen unter Vermischen zum einen Erde und zum anderen aerob abbauende Mikroorganismen zugeführt werden, wird das Gemisch aus den zu kompostierenden Haushaltsabfällen, der Erde und den Mikroorganismen dann über einen Zeitraum von 7 bis 15 Tagen, vorzugsweise von 10 bis 14 Tagen, in dem Temperaturbereich des zweiten Schrittes zum Reifen gelagert.

Bei dem Kompostierungsprozess handelt es sich um einen aeroben Abbau durch Mikroorganismen. Die Mikroorganismen übernehmen dabei etwa 80 % bis 90 % der Abbauleistung. Bei dem Abbau während der Kompostierung wird Wärme freigesetzt, d. h. es handelt sich um einen exothermen Prozess.

Als Erde kann natürlich Blumenerde oder natürliche Gartenerde zugegeben werden. Wichtig ist, dass in der Erde ausreichend Bakterien enthalten sind.

Im dritten Schritt kann zu dem Gemisch aus den zu kompostierenden Haushaltsabfällen und der Erde oder zu dem Gemisch aus den zu kompostierenden Haushaltsabfällen und den aerob abbauenden Mikroorganismen oder zu dem Gemisch aus den zu kompostierenden Haushaltsabfällen, der Erde und den aerob abbauenden Mikroorganismen ferner ein Schnellkomposter zugegeben werden, wobei der Schnellkomposter nach der Zugabe oder während der Zugabe mit dem Gemisch vermengt wird. Der Schnellkomposter kann beispielsweise als Pulver oder als Granulat ausgebildet sein. Vor Zugabe kann das Granulat oder das Pulver in Wasser gelöst werden. Das bietet den Vorteil, dass sich dieser in dem Gemisch verteilt. Durch den Schnellkomposter wird das biologische Rotten unterstützt und der Rottungsvorgang beschleunigt, so dass insoweit das beabsichtigte Kompostierergebnis schneller erreicht werden kann. Der Schnellkomposter stellt den Mikroorganismen Nährstoffe zur Verfügung, so dass die Mikroorganismen rascher arbeiten können. Ein Schnellkomposter kann beispielsweise Milchzucker und/oder Honig enthalten. In Ergänzung oder alternativ kann der Schnellkomposter beispielsweise Heilkräuter und/oder Eichenrinde enthalten.

Das volumetrische Verhältnis zwischen dem Schnellkomposter und den zu kompostierenden Haushaltsabfällen im dritten Schritt beträgt 1 zu 2000.

Dabei kann die Dauer des dritten Schrittes der Summe der Dauer des ersten Schrittes und der Dauer des zweiten Schrittes entsprechen. Dauert der dritte Schritt beispielsweise zwei Wochen, beträgt die Gesamtdauer des ersten Schrittes und des zweiten Schrittes ebenfalls zwei Wochen.

Zur Durchführung des Verfahrens kann zumindest ein Behältnis mit einem Volumen zwischen 10 Liter und 50 Liter, vorzugsweise mit einem Volumen zwischen 25 Liter und 40 Liter, bevorzugt mit einem Volumen von 30 Liter, verwendet werden. Selbstverständlich sind auch größere oder kleinere Behältnisse abhängig von der Größe des Haushaltes bzw. der Personenanzahl möglich.

Im ersten Schritt können zwischen 10 Liter und 50 Liter, vorzugsweise zwischen 25 Liter und 40 Liter, bevorzugt 30 Liter, der zu kompostierenden Haushaltsabfälle in das Behältnis gegeben werden.

Im ersten Schritt kann zu Beginn die komplette Menge der zu kompostierenden Haushaltsabfälle in einem in das Behältnis gegeben werden.

Es ist aber auch durchaus möglich, dass im ersten Schritt die Menge der zu kompostierenden Haushaltsabfälle zeitversetzt, vorzugsweise kontinuierlich, in das Behältnis gegeben wird. Bei der letztgenannten Verfahrweise werden die zu kompostierenden Haushaltsabfälle insoweit beispielsweise täglich dem Verfahren zugegeben.

Alle Schritte des Verfahrens können in ein und demselben Behältnis durchgeführt werden.

Alternativ ist es aber auch möglich, dass der zweite Schritt und der dritte Schritt in einem anderen Behältnis als der erste Schritt durchgeführt werden. Bei einer solchen Verfahrweise wird der erste Schritt in einem ersten Behältnis und der zweite und der dritte Schritt in einem zweiten anderen Behältnis durchgeführt. Am Ende des ersten Schrittes werden die zu kompostierenden Haushaltsabfälle von dem ersten Behältnis in das zweite andere Behältnis gegeben, so dass dann in dem zweiten anderen Behältnis der zweite und der dritte Schritt durchgeführt werden. Bei einer solchen Verfahrweise muss das erste Behältnis lediglich eine Heizeinrichtung, beispielsweise eine außenseitige Heizwendel, aufweisen. Das zweite andere Behältnis, in dem nur der zweite und der dritte Schritt durchgeführt werden, benötigt dann keine Heizeinrichtung. Sofern in dem zweiten anderen Behältnis ein "aktives" Abkühlen gewünscht ist, verfügt das zweite andere Behältnis über eine Kühleinrichtung, beispielsweise eine auf der Außenseite des Behältnisses angeordnete Kühleinrichtung.

Die zu kompostierenden Haushaltsabfälle können vor dem ersten Schritt zerkleinert werden. So kann die Zerkleinerung beispielsweise in einem Häcksler erfolgen.

Als Mikroorganismen können Bakterien und/oder Aktinomyceten und/oder Pilze verwendet werden. Für die Kompostierung geeignete Bakterien können nach ihrer Aktivität in verschiedene Temperaturbereiche einklassifiziert werden.

Als Bakterien können psychrophile Bakterien verwendet werden. Psychrophile Bakterien sind kälteliebend. Sie wachsen normalerweise bei Temperaturen zwischen -5 °C und +20 °C. Das Wachstumsoptimum derartiger Bakterien liegt bei rund 15 °C.

Vorteilhafterweise werden als Bakterien mesophile Bakterien verwendet. Das Wachstumsoptimum bei mesophilen Organismen, wie zum Beispiel bei mesophilen Bakterien, liegt bei Temperaturen zwischen 20 °C und 45 °C. Der mesophile Bereich stellt den wichtigsten Bereich dar, da in diesem Bereich die meisten Bakteriengruppen die größte Wachstumsrate aufweisen.

Als Bakterien können auch thermophile Bakterien verwendet werden. Thermophile Bakterien aber auch thermophile Aktinomyceten und auch thermophile Pilze wachsen bei Temperaturen zwischen etwa 50 °C und 65 °C. Die optimale Temperatur für das Wachstum liegt bei rund 55 °C. Bei Temperaturen größer 65 °C lässt die Aktivität deutlich nach oder lässt gänzlich nach. Bei Temperaturen größer 75 °C kommt es in der Regel zu einer Denaturierung.

## Patentansprüche

1. Verfahren zum Kompostieren von Haushaltsabfällen, vorzugsweise von nicht gekochten und nicht zubereiteten Lebensmittelresten, von Pflanzen und/oder von Gartenabfällen, **dadurch gekennzeichnet,**
- **dass** die zu kompostierenden Haushaltsabfälle in einem ersten Schritt in einem Behältnis über einen Zeitraum von 7 bis 15 Tagen, vorzugsweise von 10 bis 14 Tagen, derart erhitzt werden, dass die Temperatur der zu kompostierenden Haushaltsabfälle, vorzugsweise konstant, in einem Bereich zwischen 55 °C und 75 °C, vorzugsweise zwischen 60 °C und 65 °C, liegt, wobei in dem ersten Schritt die zu kompostierenden Haushaltsabfälle, vorzugsweise regelmäßig, zur Gewährleistung einer ausreichenden Sauerstoffzufuhr durchmischt werden und, vorzugsweise regelmäßig, die massenspezifische Feuchte der zu kompostierenden Haushaltsabfälle gemessen und durch Hinzugeben von Wasser so angepasst wird, dass die zu kompostierenden Haushaltsabfälle eine massenspezifische Feuchte von 45 % bis 65 % aufweisen,
- **dass** in einem zweiten Schritt anschließend die zu kompostierenden Haushaltsabfälle auf eine Temperatur zwischen 20 °C und 35 °C, vorzugsweise zwischen 25 °C und 27 °C, abkühlen bzw. abgekühlt werden und
- **dass** anschließend in einem dritten Schritt
den zu kompostierenden Haushaltsabfällen unter Vermischen Erde zugeführt wird, wobei die Masse der zugeführten Erde zwischen 2 % und 10 % der Masse der zu kompostierenden Haushaltsabfälle, vorzugsweise zwischen 4 % und 5 % der Masse der zu kompostierenden Haushaltsabfälle, beträgt, und das Gemisch aus den zu kompostierenden Haushaltsabfällen und der Erde über einen Zeitraum von 7 bis 15 Tagen, vorzugsweise von 10 bis 14 Tagen, in dem Temperaturbereich des zweiten Schrittes zum Reifen gelagert wird
und/oder
den zu kompostierenden Haushaltsabfällen unter Vermischen aerob abbauende Mikroorganismen in fester Form und/oder in flüssiger Form zugeführt werden und das Gemisch aus den zu kompostierenden Haushaltsabfällen und den Mikroorganismen über einen Zeitraum von 7 bis 15 Tagen, vorzugsweise von 10 bis 14 Tagen, in dem Temperaturbereich des zweiten Schrittes zum Reifen gelagert wird.

2. Verfahren nach dem vorhergehenden Anspruch, **dadurch gekennzeichnet, dass** als Erde natürliche Blumenerde oder natürliche Gartenerde zugegeben wird.

3. Verfahren nach einem der vorhergehenden Ansprüche, **dadurch gekennzeichnet, dass** im dritten Schritt zu dem Gemisch aus den zu kompostierenden Haushaltsabfällen und der Erde oder zu dem Gemisch aus den zu kompostierenden Haushaltsabfällen und den aerob abbauenden Mikroorganismen oder zu dem Gemisch aus den zu kompostierenden Haushaltsabfällen, der Erde und den aerob abbauenden Mikroorganismen ferner ein Schnellkomposter zugegeben wird, wobei der Schnellkomposter nach der Zugabe oder während der Zugabe mit dem Gemisch vermengt wird.

4. Verfahren nach dem vorhergehenden Anspruch, **dadurch gekennzeichnet, dass** das volumetrische Verhältnis zwischen dem Schnellkomposter und den zu kompostierenden Haushaltsabfällen im dritten Schritt 1 zu 2000 beträgt.

5. Verfahren nach einem der vorhergehenden Ansprüche, **dadurch gekennzeichnet, dass** die Dauer des dritten Schrittes der Summe der Dauer des ersten Schrittes und der Dauer des zweiten Schrittes entspricht.

6. Verfahren nach einem der vorhergehenden Ansprüche, **dadurch gekennzeichnet, dass** zur Durchführung des Verfahrens zumindest ein Behältnis mit einem Volumen zwischen 10 Liter und 50 Liter, vorzugsweise mit einem Volumen zwischen 25 Liter und 40 Liter, bevorzugt mit einem Volumen von 30 Liter, verwendet wird.

7. Verfahren nach einem der vorhergehenden Ansprüche, **dadurch gekennzeichnet, dass** im ersten Schritt zwischen 10 Liter und 50 Liter, vorzugsweise zwischen 25 Liter und 40 Liter, bevorzugt 30 Liter, der zu kompostierende Haushaltsabfälle in das Behältnis gegeben werden.

8. Verfahren nach einem der vorhergehenden Ansprüche, **dadurch gekennzeichnet, dass** im ersten Schritt zu Beginn die komplette Menge der zu kompostierenden Haushaltsabfälle in einem in das Behältnis gegeben wird.

9. Verfahren nach einem der Ansprüche 1 bis 7, **dadurch gekennzeichnet, dass** im ersten Schritt die Menge der zu kompostierenden Haushaltsabfälle zeitversetzt, vorzugsweise kontinuierlich, in das Behältnis gegeben wird.

10. Verfahren nach einem der vorhergehenden Ansprüche, **dadurch gekennzeichnet, dass** alle Schritte des Verfahrens in ein und demselben Behältnis durchgeführt werden.

11. Verfahren nach einem der Ansprüche 1 bis 9, **dadurch gekennzeichnet, dass** der zweite Schritt und der dritte Schritt in einem anderen Behältnis als der erste Schritt durchgeführt werden.

12. Verfahren nach einem der vorhergehenden Ansprüche, **dadurch gekennzeichnet, dass** die zu kompostierenden Haushaltsabfälle vor dem ersten Schritt zerkleinert werden.

13. Verfahren nach einem der vorhergehenden Ansprüche, **dadurch gekennzeichnet, dass** als Mikroorganismen Bakterien und/oder Aktinomyceten und/oder Pilze verwendet werden.

14. Verfahren nach dem vorhergehenden Anspruch, **dadurch gekennzeichnet, dass** als Bakterien psychrophile Bakterien verwendet werden.

15. Verfahren nach einem der Ansprüche 13 oder 14, **dadurch gekennzeichnet, dass** als Bakterien mesophile Bakterien verwendet werden.

16. Verfahren nach einem der Ansprüche 13 bis 15, **dadurch gekennzeichnet, dass** als Bakterien thermophile Bakterien verwendet werden.
